# EUROPEAN PATENT APPLICATION

(11) **EP 1 109 357 A1**
(43) Date of publication of application: **20.06.2001**
(21) Application number: 00929813.4
(22) Date of filing: 19.05.2000
(51) Int. Cl.: H04L 12/28, G06F 13/00

(54) **METHOD OF COMMUNICATION, COMMUNICATION DEVICE, COMMUNICATION CONTROLLER, COMMUNICATION SYSTEM, AND MEDIUM**

(30) Priority: 19.05.1999 JP 13919999
(71) Applicant: Sony Corporation, Tokyo 141-0001 (JP)
(72) Inventor: MIYANO, Michio, Shinagawa-ku, Tokyo 141-0001 (JP); KATO, Junji, Shinagawa-ku, Tokyo 141-0001 (JP)
(74) Representative: Pilch, Adam John Michael
(86) International application number: JP0003232
(87) International publication number: WO0070830

(57) **Abstract**

In a communication method for performing communication between devices connected to a predetermined network of the IEEE1394 system or the like, when isochronous communication is performed between a first device and a second device which are connected to the network, for example, a connection is established by using a first isochronous channel between an imaginary output plug of the first device and an imaginary input plug of the second device, and a connection is established by using a second isochronous channel between an imaginary output plug of the second device and an imaginary input plug of the first device, so that bidirectional communication is performed by using the first and second isochronous channels in which the connections are established to thereby easily set a connection dedicated to isochronous transmission between specific devices.

## Description

### TECHNICAL FIELD

The present invention relates to a communication method for performing data communication between devices connected through a bus line of the IEEE (The Institute of Electrical and Electronics Engineers) 1394 system, for example, a communication device to which the communication method is applied, a communication control device which controls the communication by the communication device, a communication system by which the communication is executed, and a supply medium in which a program which executes the communication method is stored.

### BACKGROUND ART

AV devices which can transmit information to each other through a network using a serial data bus of the IEEE1394 system are developed. When data transmission is performed through the bus, an isochronous transfer mode (isochronous communication) used when a relatively large amount of data is transmitted on real time and an asynchronous transfer mode (asynchronous communication) used when a control command or the like is reliably transmitted are prepared, and for the isochronous transfer mode a channel dedicated thereto is used in transmission.

Here, when data transmission is performed by a conventional IEEE1394 system bus in the isochronous transfer mode, a channel called a broadcast channel and commonly used in devices is used. When the broadcast channel is used, a process of acquiring the channel right is performed to a manager for managing an isochronous channel, and a device which acquires the channel right transmits data to the corresponding channel.

Since the transmission using the broadcast channel can be performed if only the channel right can be acquired, the transmission can be performed by relatively simple control. However, since the transmission is basically a process of transmitting data without specifying a destination, the transmission is not appropriate to establishment of a connection between a control device having such a characteristic feature that its own state is determined depending on the state of a destination device and a target device having such a characteristic feature that its own state is determined depending on a control signal from the destination device. More specifically, when state data need to be returned from a destination device to one device while data is transmitted from the one device by a broadcast channel, a process of switching transmission sources of the broadcast channel, i.e., a process of frequently switching transmission sources of the broadcast channel is required, so that preferable efficiency cannot be obtained.

### DISCLOSURE OF THE INVENTION

It is an object of the present invention to easily set an isochronous transfer exclusive connection between specific devices in a network such as the IEEE 1394 system.

According to the first invention, in a communication method for effecting a communication between devices connected to a predetermined network, this communication method comprises the step of establishing a first connection between a first device and another device connected to the network, setting a second connection between the first device and the other device and effecting an isochronous communication between the specific device and the other device by using the two connections of the first connection and the second connection. With this arrangement, the isochronous transfer becomes possible by establishing a point-to-point connection using an exclusive isochronous channel between the first device and the other device.

According to the second invention, in the communication method according to the first invention, the first connection is a connection established by using a first isochronous channel between a virtual output plug of the first device and a virtual input plug of a second device comprising the other device, the second connection is a connection established by using a second isochronous channel between a virtual output plug of the second device and a virtual input plug of the first device, and a bidirectional communication is effected by using the first and second isochronous channels with the first and second connections established thereon. With this arrangement, the isochronous transfer becomes possible by setting a point-to-point connection using bidirectional exclusive isochronous channels between two devices. Accordingly, a controller for controlling a communication need not establish or cancel the connection depending upon the operating state of a target device. Therefore, a transaction need not be transmitted and received in order to switch a connection (switching of input and output), and hence a congestion of a network traffic can be avoided. Moreover, it is possible to prevent an accident in which a connection cannot be established between the controller and the target device depending upon the situation of the network. Thus, a user can be prevented from being confused.

According to the third invention, in the communication method according to the first invention, the first connection is a connection established between the virtual output plug of the first device and the virtual input plug of the second device which is one of other devices by using a first isochronous channel, the second connection is a connection established between a virtual output plug of a third device which is one of other devices and the virtual input plug of the first device by using a second isochronous channel, and a communication from the first device to the second device is made by using the first isochronous channel with the first connection established thereon and a communication from the third device to the first device is made by using the second isochronous channel with the second connection established thereon. With this arrangement, the isochronous communication from the first device to the second device and the isochronous communication from the third device to the first device can be executed simultaneously so that data can be transmitted among the three devices efficiently.

According to the fourth invention, in the communication method according to the first invention, when the network is reset in the state in which the connection is established, in order to re-establish the connection, which was canceled by the reset of the network, a re-establishing work is executed with reference to a table of identification IDs on the network and identification IDs unique to respective devices. With this arrangement, a connection can be restored reliably.

According to the fifth invention, in the communication method according to the fourth invention, if it is determined with reference to the table that the device in which the connection was set is not connected to the network, the work for re-establishing the connection is stopped. With this arrangement, it is possible to reliably prevent a malfunction in which processing is executed on a device which is not connected.

According to the sixth invention, a communication apparatus connected to a predetermined network includes an output plug for outputting data to other device connected to the network by using a first isochronous channel, an input plug for inputting data to a device by using a second isochronous channel and control means for individually setting a connection using the output plug and a connection using the input plug. With this arrangement, an isochronous transfer becomes possible by setting a point-to-point connection using an exclusive isochronous channel between this communication apparatus and other device on the network.

According to the seventh invention, in the communication apparatus according to the sixth invention, the device in which a connection with an output plug is established by the control means and the device in which a connection with an input plug is established by the control means are an input plug and an output plug of the same device. With this arrangement, a bidirectional transmission line using two isochronous channels is set between this communication apparatus and another device, and hence a bidirectional isochronous transfer becomes possible.

According to the eighth invention, in the communication apparatus according to the sixth invention, the device in which a connection with the output plug is established by the control means is the input plug of the first device and the device in which a connection with the input plug is established by the control means is the output plug of the second device. With this arrangement, an isochronous transfer transmission line from this communication apparatus to the first device and an isochronous transfer transmission line from the second device to this communication apparatus are set simultaneously, and hence data can efficiently be transmitted among this communication apparatus and other two devices.

According to the ninth invention, in the communication apparatus according to the sixth invention, if the control means detects that the network is reset in the state in which the connection is established, it executes a work for re-establishing a connection with reference to a table stored in a storage section which stores therein a table of identification IDs on the network and identification IDs unique to respective devices. With this arrangement, the connection can be restored reliably.

According to the tenth invention, in the communication apparatus according to the ninth invention, the control means stops the work for re-establishing the connection if it is determined by the control means based on the table stored in the storage section that the device in which the connection was established is not connected to the network. With this arrangement, it is possible to reliably prevent a malfunction in which processing is effected on a device which is not connected.

According to the eleventh invention, a communication control apparatus for controlling a communication among a plurality of devices connected to a predetermined network includes connection management means for effecting control in such a manner that a first connection is established between a first device and another device connected to the network and a second connection is established between the first device and the other device. With this arrangement, a communication control for executing an isochronous transfer becomes possible by setting a point-to-point connection using an exclusive isochronous channel between the first device and the other device.

According to the twelfth invention, in the communication control apparatus according to the eleventh invention, the first connection established under control of the connection management means is a connection established by using the first isochronous channel between a virtual output plug of the first device and a virtual input plug of the second device comprising another device, the second connection established under control of the connection management means is a connection established by using a second isochronous channel between a virtual output plug of the second device and a virtual input plug of the first device and a bidirectional communication is executed by using the first and second isochronous channels with the first and second connections established thereon. With this arrangement, a communication control for executing the isochronous transfer becomes possible by setting a point-to-point connection using an exclusive bidirectional isochronous channel between the two devices. Accordingly, the communication control apparatus need not establish or cancel a connection depending upon the operating state of a target device. Consequently, a transaction need not be transmitted and received in order to switch a connection (switching of input and output), and hence it is possible to avoid a congestion of a network traffic. Moreover, an accident in which a connection cannot be established depending upon the state of the network between the control apparatus and the target device can be avoided, and hence it is possible to prevent a user from being confused.

According to the thirteenth invention, in the communication control apparatus according to the eleventh invention, the first connection established under control of the connection management means is a connection established between a virtual output plug of the first device and a virtual input plug of the second device comprising the other device by using the first isochronous channel, the second connection established under control of the connection management means is a connection established between a virtual output plug of a third device comprising another device and the virtual input plug of the first device by using the second isochronous channel, and a communication from the first device to the second device using the first isochronous channel with the first connection established thereon and a communication from the third device to the first device by using the second isochronous channel with the second connection established thereon are executed. With this arrangement, a communication control for executing an efficient isochronous transfer becomes possible by setting a point-to-point connection using the two isochronous channels among the three devices.

According to the fourteenth invention, in the communication control apparatus according to the eleventh invention, if the connection management means detects that a bus comprising the network is reset, the connection management means executes a work for re-establishing a connection with reference to a table of identification IDs on the network and identification IDs unique to respective devices in order to re- establish the connection that has been canceled by the reset of the network. With this arrangement, a communication control for reliably restoring a connection can be executed.

According to the fifteenth invention, in the communication control apparatus according to the eleventh invention, the connection management means stops the work for re-establishing the connection if it is determined by the connection management means based on the table that the device with the connection established thereon is not connected to the network. With this arrangement, it is possible to reliably prevent a malfunction in which connection establishing processing is effected on a device which is not connected.

According to the sixteenth invention, in a communication system for effecting a communication between a first device and a second device connected to a predetermined network, the first device includes a virtual output plug for isochronous communication and a virtual input plug for isochronous communication, the second device includes a virtual output plug for isochronous communication and a virtual input plug for isochronous communication, a first connection is established between the virtual output plug of the first device and the virtual input plug of the second device by using a first isochronous channel, a second connection is established between the virtual output plug of the second device and the virtual input plug of the first device by using a second isochronous channel and a bidirectional isochronous communication is effected between the first device and the second device by using the first connection and the second connection. With this arrangement, the isochronous transfer becomes possible by setting a point-to-point connection using the bidirectional exclusive isochronous channel between the two devices. Accordingly, a controller for controlling a communication need not set or cancel the connection depending upon the operating state of a target device. Consequently, a transaction need not be transmitted and received in order to switch the connection (switching of input and output), and hence a congestion of a network traffic can be avoided. Moreover, it is possible to avoid an accident in which a connection cannot be established between the controller and the target device depending upon the situation of the network. Thus, a user can be prevented from being confused.

According to the seventeenth invention, in a communication system for effecting a communication among a first device, a second device and a third device connected to a predetermined network, the first device includes a virtual output plug for isochronous communication and a virtual input plug for isochronous communication, the second device includes a virtual input plug for isochronous communication and the third device includes a virtual output plug for isochronous communication, a first connection is established between the virtual output plug of the first device and the virtual input plug of the second device by using a first isochronous channel, a second connection is established between the virtual output plug of the third device and the virtual input plug of the first device by using a second isochronous channel and a communication from the first device to the second device is effected by using the first connection and a communication from the third device to the first device is effected by using the second connection. With this arrangement, an isochronous communication from the first device to the second device and an isochronous communication from the third device to the first device can be executed simultaneously, and hence data can efficiently be transmitted among the three devices.

According to the eighteenth invention, in a supply medium which stores therein a program for controlling a communication effected between devices connected to a predetermined network, there is stored a program in which a first connection is established between a first device and another device connected to the network, a second connection is established between the first device and the other device and processing for effecting an isochronous communication between the first device and the other device by using the first connection and the second connection is executed. With this arrangement, processing for executing an isochronous transfer becomes possible by setting a point-to-point connection using an exclusive isochronous channel between the first device and the other device.

### BRIEF DESCRIPTION OF DRAWINGS

FIG. 1 is a block diagram showing an example of an arrangement of the whole of a system according to an embodiment of the present invention.

FIG. 2 is a block diagram showing an example of an arrangement of a digital satellite broadcast receiver according to an embodiment of the present invention.

FIG. 3 is a block diagram showing an example of an arrangement of a video recording and reproducing apparatus according to an embodiment of the present invention.

FIG. 4 is a block diagram showing an example of an arrangement of an audio recording and reproducing apparatus according to an embodiment of the present invention.

FIG. 5 is a block diagram showing an example of an arrangement of a television receiver according to an embodiment of the present invention.

FIG. 6 is an explanatory diagram showing an example of a frame structure prescribed by the IEEE 1394 system.

FIG. 7 is an explanatory diagram showing an example of a structure of an address space of a CRS architecture.

FIG. 8 is an explanatory diagram showing examples of positions, names and operations of major CRS.

FIG. 9 is an explanatory diagram showing an example of an arrangement of a plug control register.

FIG. 10 is an explanatory diagram showing examples of arrangements of bus info, root directory and unit directory.

FIG. 11 is an explanatory diagram showing examples of arrangements of oMPR, oPCR, iMPR, iPCR.

FIG. 12 is an explanatory diagram showing an example of a relationship among plugs, plug control registers and transmission channels.

FIG. 13 is a diagram showing a data transmission state according to an embodiment of the present invention.

FIG. 14 is a diagram showing another example of a data transmission state according to an embodiment of the present invention.

FIG. 15 is a flowchart showing an example of processing for establishing a connection between two devices according to an embodiment of the present invention.

FIG. 16 is a flowchart showing an example of processing for establishing connections among three devices according to an embodiment of the present invention.

FIG. 17 is a flowchart showing an example of connection cancel processing according to an embodiment of the present invention.

FIG. 18 is a flowchart showing an example of connection cancel processing executed when connections are established among three devices according to an embodiment of the present invention.

FIG. 19 is an explanatory diagram showing an example of a corresponding table of node IDs and node unique IDs according to an embodiment of the present invention.

FIG. 20 is a flowchart showing an example of processing for checking a correspondence among node IDs and node unique IDs according to an embodiment of the present invention.

FIG. 21 is a flowchart showing an example of processing executed when a bus is reset according to an embodiment of the present invention.

### BEST MODE FOR CARRYING OUT THE INVENTION

An embodiment according the present invention will be described below with reference to the drawings.

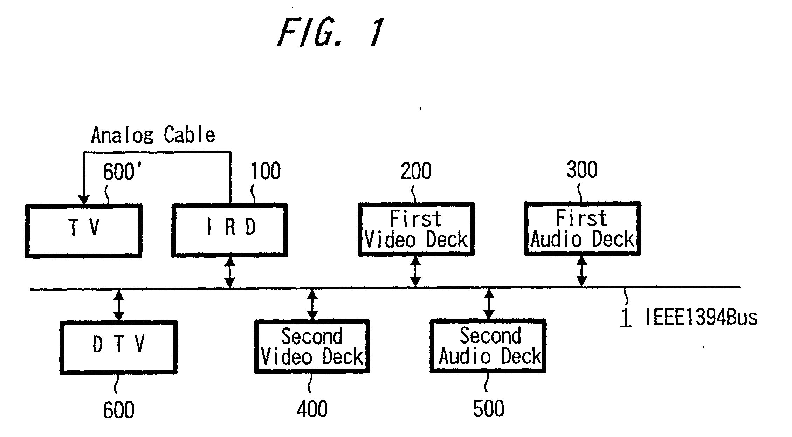

An example of an arrangement of a network system to which the present invention is applied will be described below with reference to FIG. 1. In this network system, a plurality of devices are connected through a serial data bus 1 (to be referred to as a bus 1 hereinafter) of the IEEE1394 system. In FIG. 1, an example in which six AV devices 100, 200, 300, 400, 500, and 600 are connected is shown. As respective devices connected to the bus 1, an IRD (Integrated Receiver Decoder) 100, a first video deck 200, a first audio deck 300, a second video deck 400, a second audio deck 500, and a television receiver 600 each having a terminal of the IEEE1394 system are used. Although the decks 200 to 500 and the television receiver 600 can also be independently operated, control from the IRD 100 can be also performed. In the control from the IRD 100, the IRD 100 serves as a controller, and the other devices serve as target devices.

To the IRD 100 serving as a digital satellite broadcast receiver a television receiver 600 and a television receiver 600' are connected respectively through analog cables, so that a broadcast program received by the IRD 100 can be viewed and heard not only on the television receiver 600 side but also the television receiver 600' side.

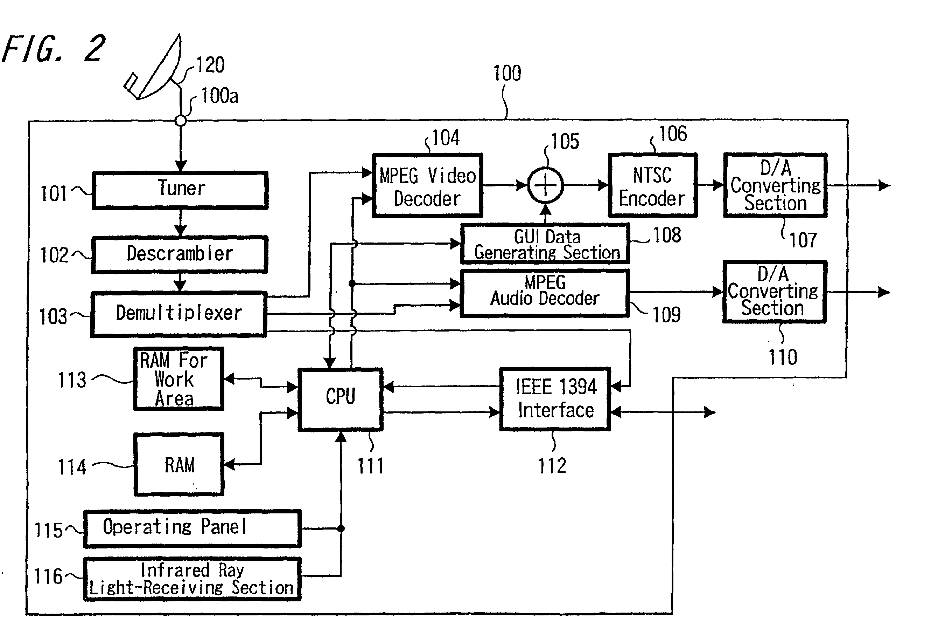

FIG. 2 is a diagram showing a concrete arrangement of the IRD 100. Broadcast waves from a satellite are received at the antenna 120, inputted to a terminal 100a and supplied to a tuner 101 serving as a program selecting means provided within the IRD 100. The IRD 100 is arranged such that its respective circuits are operated under control of a central processing unit (CPU) 111. A signal of a predetermined channel is obtained from the tuner 101. The received signal obtained by the tuner 101 is supplied to a descramble circuit 102. Based on encrypted key information of a subscribed channel stored in an IC card (not shown) inserted into the body of the IRD 100, the descramble circuit 102 extracts only multiplexed data of a subscribed channel (or channel which is not yet encrypted) from received data and supplies the multiplexed data thus extracted to a demultiplexer 103.

The demultiplexer 103 rearranges the multiplexed data supplied thereto at every channel, extracts only data of the channel designated by a user, transmits a video stream comprising packets of video portion to an MPEG video decoder 104 and also transmits an overlap stream comprising packets of audio portion to an MPEG audio decoder 109.

The MPEG decoder 104 decodes the video stream to restore video data which is not yet compression-coded and transmits such video data through an adder 105 to an NTSC encoder 106. The NTSC encoder 106 encodes the video data to provide NTSC system luminance signal and color difference signals and transmits the same to a digital-to-analog converter 107 as NTSC system video data. The digital-to-analog converter 107 converts the NTSC data into an analog video signal and supplies the analog video signal to a connected receiver (not shown).

The IRD 100 according to this embodiment includes a GUI data generating section 108 which generates various kinds of display video data for a graphical user interface (GUI) under control of the CPU 111. The GUI video data (display data) generated by this GUI data generating section 108 is supplied to the adder 105, in which it is superimposed upon the video data outputted from the MPEG video decoder 104 and thereby a GUI picture is superimposed upon a broadcast picture.

The MPEG audio decoder 109 decodes an audio stream to restore PCM audio data which is not yet compression-coded and transmits the same to a digital-to-analog converter 110.

The digital-to-analog converter 110 converts the PCM audio data into an analog signal to provide a left channel audio signal and a right channel audio signal, and outputs the same through speakers (not shown) of a connected audio reproducing system as sounds.

The IRD 100 according to this embodiment can supply the video stream and the audio stream extracted by the demultiplexer 103 to an IEEE 1394 interface section 112 from which they can be transmitted to the IEEE 1394 system bus line 1 connected to the interface section 112. The received video stream and audio stream are transmitted in the isochronous transfer mode. Further, while the GUI video data is being generated by the GUI data generating section 108, the above video data is supplied through the CPU 111 to the interface section 112 so that the GUI video data can be transmitted from the interface section 112 to the bus line 1.

A RAM 113 for work area and a RAM 114 are connected to the CPU 111, and control processing is executed by using these memories. Operation commands from an operating panel 115 and a remote control signal from an infrared-ray light-receiving section 116 are supplied to the CPU 111 which can therefore be driven based on a variety of operation. The CPU 111 can judge commands and responses transmitted from the bus line 1 side to the interface section 112.

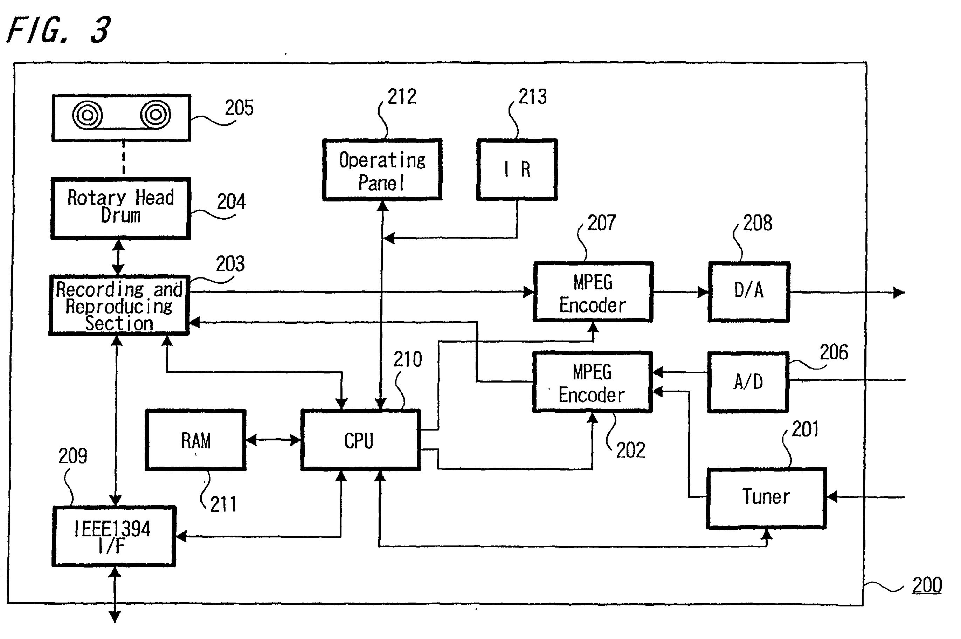

FIG. 3 is a block diagram showing an example of an arrangement of a video deck 200 as a digital video cassette recorder(DVCR).

In the arrangement of the recording system, digital broadcasting data obtained when a tuner 201 incorporated in the video deck 200 received data of a predetermined channel is supplied to an MPEG (Moving Picture Experts Group) encoder 202, in which it is encoded to provide video data and audio data suitable for recording, e.g., MPEG2 system video data and audio data. If received broadcasting data is MPEG2 system data, then such received broadcasting data need not be processed by the encoder 202.

The data encoded by the MPEG encoder 202 is supplied to a recording and reproducing section 203, in which it is processed for recording. The recording data thus processed is supplied to a recording head provided within a rotary head drum 204 and thereby recorded on a magnetic tape provided within a tape cassette 205.

After an analog video signal and an analog audio signal inputted from the outside had been converted into digital data by an analog-to-digital converter 206 , they are supplied to the MPEG encoder 202, in which they are encoded to provide MPEG2 system video data and audio data and supplied to the recording and reproducing section 203 and thereby processed for recording. The recording data thus processed is supplied to the recording head provided within the rotary head drum 204 and thereby recorded on a magnetic tape provided within the tape cassette 205.

In the arrangement of the reproducing system, a signal obtained when the magnetic tape within the tape cassette 205 is reproduced by the rotary head drum 204 is supplied to the recording and reproducing section 203, in which it is processed for reproduction to provide video data and audio data. The video data and the audio data are supplied to an MPEG decoder 207, in which they are decoded from MPEG system video data and audio data, for example. The decoded data are supplied to a digital-to-analog converter 208, in which they are converted into an analog video signal and an analog audio signal and then outputted to the outside.

The DVCR 200 includes an interface section 209 for the connection to the IEEE 1394 system bus. Video data and audio data obtained at this interface section 209 from the IEEE 1394 system bus side are supplied to the recording and reproducing section 203 and thereby recorded on the magnetic tape provided within the tape cassette 205. Video data and audio data reproduced from the magnetic tape provided within the tape cassette 205 are supplied from the recording and reproducing section 203 to the interface section 209 from which they can be transmitted to the IEEE 1394 system bus side.

When video data and audio data are transmitted through the interface section 209, if the system in which video data and audio data are recorded on a medium (magnetic tape) by the DVCR 200 and the system of data transmitted over the IEEE 1394 system bus differ from each other, then the system may be converted by circuits provided within the video deck 200.

The recording processing and the reproducing processing by the video deck 200 and the transmission processing through the interface section 209 are executed under control of the central processing unit (CPU) 210. The memory 211 which is the RAM for work area is connected to the CPU 210. Operation information from an operating panel 212 and control information received by an infrared-ray light-receiving section 213 from the remote control apparatus are supplied to the CPU 210 which can control operation corresponding to the operation information and the control information. Further, when the interface section 209 receives control data such as an AV/C command, which is deccribed later, through the IEEE 1394 system bus, the above data is supplied to the CPU 210, and hence the CPU 210 can control corresponding operation.

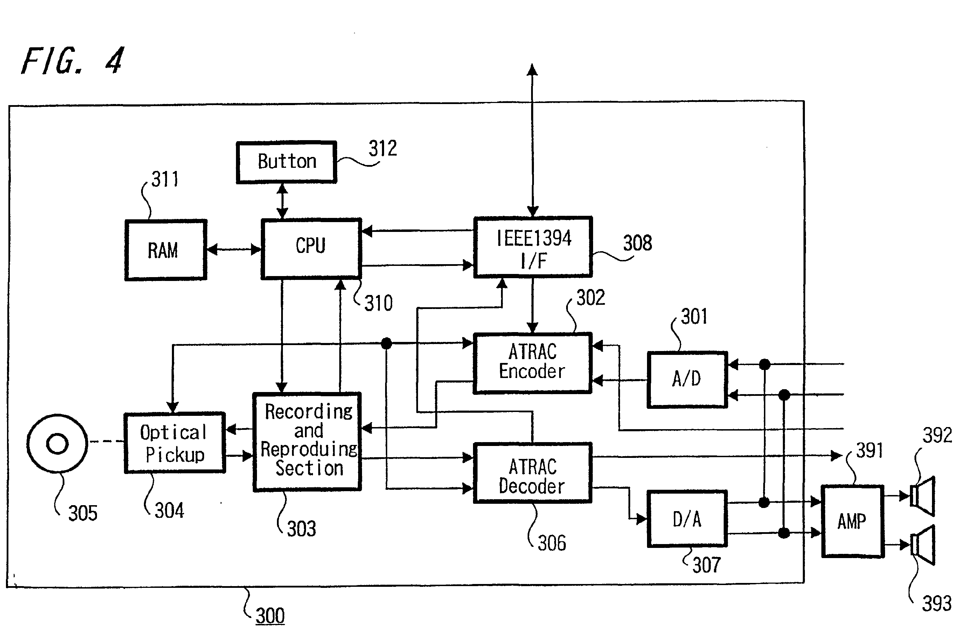

FIG. 4 is a block diagram showing an example of an arrangement of an audio deck 300. The audio deck 300, which is an audio recording and reproducing apparatus, is an apparatus using a magnetooptical disk or an optical disk incorporated into a resin package called an MD (mini disc) as a recording medium to record and reproduce an audio signal and the like as digital data.

In the arrangement of the recording system, an analog 2-channel audio signal inputted from the outside is converted into digital audio data by an analog/digital converter 301. The digital audio data thus converted is supplied to an ATRAC encoder 302, in which it is encoded into audio data compressed by the ATRAC system. When the digital audio data is directly inputted from the outside, the inputted audio data is not supplied to the analog/digital converter 301 but is directly supplied to the ATRAC encoder 302. The data encoded by the encoder 302 is supplied to a recording and reproducing section 303, in which it is processed for recording, and the data is recorded on a disk (magnetooptical disk) 305 by driving an optical pickup 304 based on the processed data. Upon recording, a magnetic field is modulated by a magnetic head, not shown.

In the arrangement of the reproducing system, data recorded on the disk (magnetooptical disk or optical disk) 305 is read out by the optical pickup 304 and processed for reproduction by the recording and reproducing section 303, thereby audio data compressed by the ATRAC system being obtained. This reproduced audio data is supplied to an ATRAC decoder 306, in which it is decoded into digital audio data of a predetermined system. The decoded audio data is supplied to a digital/analog converter 307, in which it is converted into a 2-channel analog audio signal and outputted. When the digital audio signal is directly outputted to the outside, the audio data decoded by the ATRAC decoder 306 is not supplied to the digital/analog converter 307 but is directly outputted. In the example of FIG. 4, the outputted audio signal thus analog converted is supplied to an amplifying apparatus 391, in which it is processed for audio output processing such as being amplifying and 2-channel sounds (audio) are emanated from speakers 392, 393 connected thereto.

The audio deck 300 includes an interface section 308 for the connection with the IEEE 1394 system bus. Therefore, audio data obtained from the IEEE 1394 system bus side to this interface section 308 can be supplied through the ATRAC encoder 302 to the recording and reproducing section 302 and thereby recorded on the disk 305. The audio data reproduced from the disk 305 is supplied from the recording and reproducing section 302 through the ATRAC decoder 306 to the interface section 308 from which it can be transmitted to the IEEE 1394 system bus side.

The recording processing and the reproduction processing at the audio deck 300 and the transmission processing through the interface section 308 are executed under control of a central processing unit (CPU) 310. A memory 311 serving as a RAM for work area is connected to the CPU 310. Operating information from an operating panel 312 is supplied to the CPU 310 which then controls operation corresponding to such operating information. Further, when the interface section 308 receives control data such as an AV/C command, which will be described later on, through the IEEE 1394 system bus, the data is supplied to the CPU 310, and the CPU 310 can control corresponding operation.

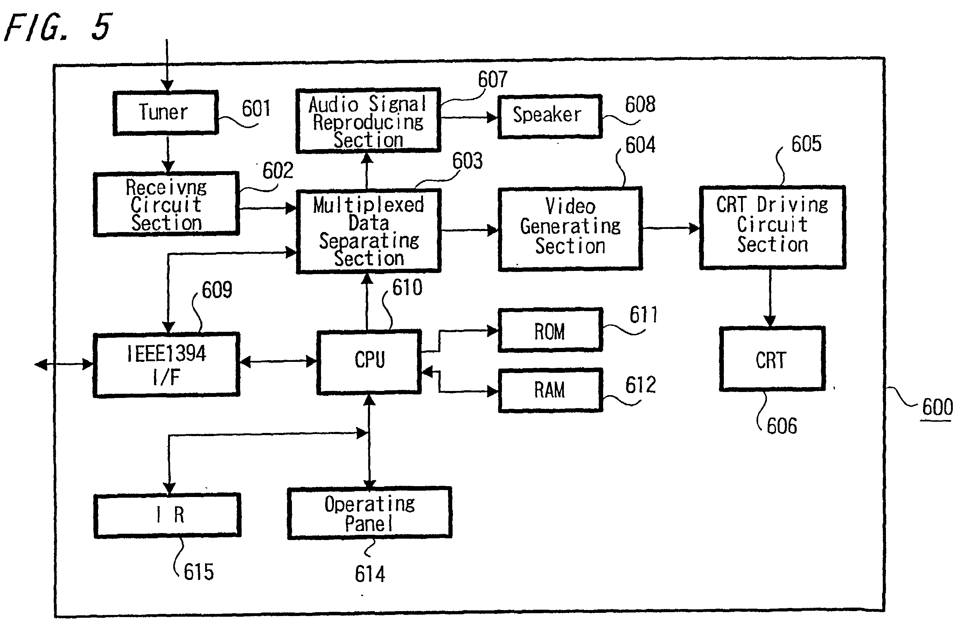

FIG. 5 is a block diagram showing an example of an arrangement of a television receiver 600. The television receiver 600 in this example is an apparatus called a digital television receiver capable of receiving and displaying a digital broadcast.

Digital broadcast data obtained when data of a predetermined channel was received at a tuner 601 with an antenna, not shown, connected thereto is supplied to a receiving circuit section 602 and thereby decoded. The decoded broadcast data is supplied to a multiplexed data separating section 603 and thereby separated into video data and audio data. The video data thus separated is supplied to a video generating section 604, in which it is processed for reception. A CRT driving circuit section 605 drives a cathode-ray tube (CRT) 606 based on the thus processed signal to display a picture. The audio data thus separated by the multiplexed data separating section 603 is supplied to an audio signal reproducing section 607, in which it is processed in an audio processing manner such as analog conversion and amplifying. The audio signal thus processed is supplied to a speaker 608 and thereby outputted.

The television receiver 600 includes an interface section 609 for the connection with the IEEE 1394 system bus. Therefore, video data and audio data obtained from the IEEE 1394 system bus side to this interface section 609 can be supplied to the multiplexed data separating section 603 and thereby a picture can be displayed on the CRT 606 and sounds can be emanated from the speaker 608. Video data and audio data received by the tuner 601 can be supplied from the multiplexed data separating section 603 to the interface section 609 and thereby transmitted to the IEEE 1394 system bus side.

The display processing at the television receiver 600 and the transmission processing via the interface section 609 are executed under control of a central processing unit (CPU) 610. A memory 611 serving as a ROM in which programs necessary for control are stored and a memory 612 serving as a RAM for work area are connected to the CPU 610. Operating information from an operating panel 614 and control information received by an infrared-ray light-receiving section 615 from a remote control apparatus are supplied to the CPU 610 which controls operation corresponding to the operating information and the control information. Further, when the interface section 609 receives control data such as an AV/C command, which will be described later on, through the IEEE 1394 system bus, such data is supplied to the CPU 610 so that the CPU 610 can control corresponding operation.

Next, a data transmission state at the IEEE 1394 system bus 1 by which the respective devices 100 to 600 are connected with each other will be described.

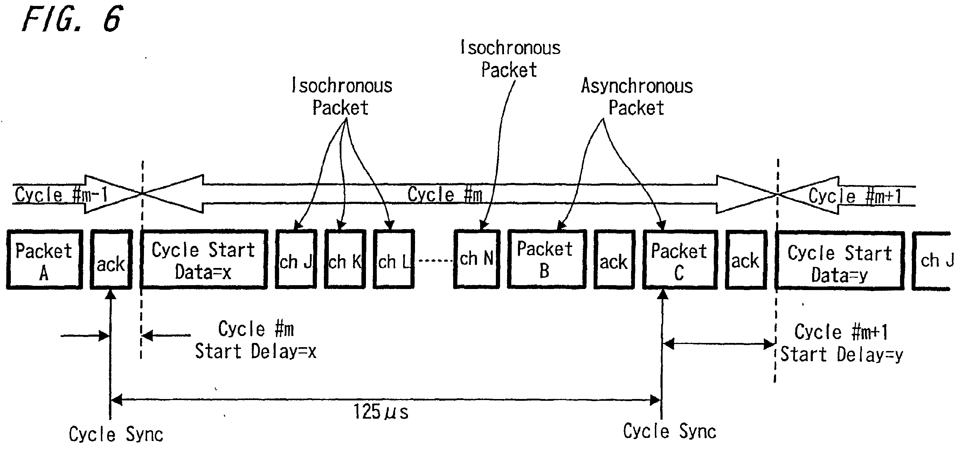

FIG. 6 is a diagram showing a data transmission cycle structure of a device connected via the IEEE 1394. According to the IEEE 1394, data is divided into packets and transmitted in a time-division manner based on a cycle of a duration of 125 (S. This cycle is created by a cycle start signal supplied from a node having a cycle master function (any device connected to the bus). An isochronous packet secures a band necessary for transmission ( referred to as a "band" although it is a time unit) from the start of all cycles. Accordingly, in the isochronous transmission, the transmission of data within a constant time can be assured. However, confirmation from the receiver side (acknowledgment) is not executed, and if a transmission error occurs, then data will be lost because this data transmission cycle structure has no mechanism for protecting data from the transmission error. In the asynchronous transmission in which a node, which secures a bus as a result of arbitration in a time which is not used in the isochronous transmission of each cycle, transmits the asynchronous packet, although a reliable transmission is assured by using acknowledge and retry, a transmission timing cannot be made constant.

Separate channel numbers 0, 1, 2 ····63 are given to respective isochronous packets (Iso packets) in a communication cycle shown in FIG. 6 so that a plurality of Iso transmission data can be distinguished. These are the isochronous channels and 64 channels are prepared in this example. Channel number 63, 63ch is a broadcast channel, and the other channels are channels transmitted among specific devices under the condition that connections are established. A channel other than 63ch can be also used as the channel for broadcasting.

After communication of Iso packet is finished, a period until the next cycle start packet is used for the transmission of the asynchronous packet (Async packet). Accordingly, a period in which the asynchronous packet can be transmitted varies depending on the then number of transmission channels of the Iso packet. Although the Iso packet is a transmission system in which a reserved band area (number of channels) is secured in every communication cycle, confirmation from the receiver side is not executed. When data is transmitted through the Async packet,the transmission side has the receiving side send back data on acknowledgement thereby confirming the state of transmission and securing the transmission.

When a predetermined node transfers data in the isochronous transfer mode, such node has to be corresponding to the isochronous function. At least one of the nodes corresponding to the isochronous function has to have a cycle master function. Further, at least one of the nodes connected to the IEEE 1394 serial bus has to have an isochronous resource manager function.

In a network system connected through the IEEE 1394 system bus 1, node IDs are given in addition to node unique IDs separately given to respective devices. The node IDs are collected from the respective devices under the control of a controller provided in a network when a device is connected newly to or is removed from the bus 1 and a bus reset occurs.

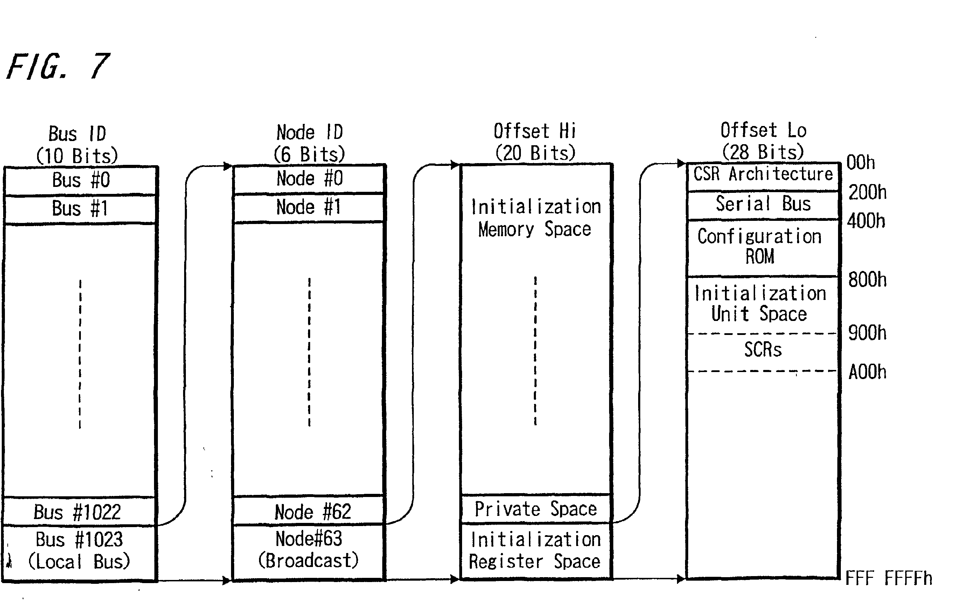

The IEEE 1394 is based on a CSR (Control & Status Register) architecture having 64-bit address space prescribed by the ISO/IEC 13213. FIG. 7 is a diagram to which reference will be made in explaining a structure of a CSR architecture address space. High-order 16 bits represent a node ID indicative of a node on each IEEE 1394, and remaining 48 bits are used to designate an address space given to each node. The high-order 16 bits are separated into 10 bits of a bus ID and 6 bits of a physical ID (node ID in a narrow sense). Values in which all bits go to 1 are for use as a special purpose, and hence 1023 buses and 63 nodes can be designated. The node IDs are given again when the bus reset occurs. The bus reset occurs when the configuration of devices connected to the bus 1 changes. For example, when such a state is recognized that any one of devices connected to the bus 1 is removed or a device is connected newly to the bus 1, the bus reset is executed.

A space prescribed by high-order 20 bits of address space prescribed by low-order 48 bits is separated into an initial register space (Initial Register Space) for use as a register unique to 2048-byte CSR, a register unique to the IEEE 1394, or the like, a private space (Private space) and an initial memory space (Initial Memory Space). A space prescribed by low-order 28 bits are for use as a configuration ROM (Configuration read only memory), an initial unit space (Initial Unit Space) for use unique to a node and plug control register (Plug Control Register (PCRs)) if a space prescribed by its high-order 20 bits is the initial register space.

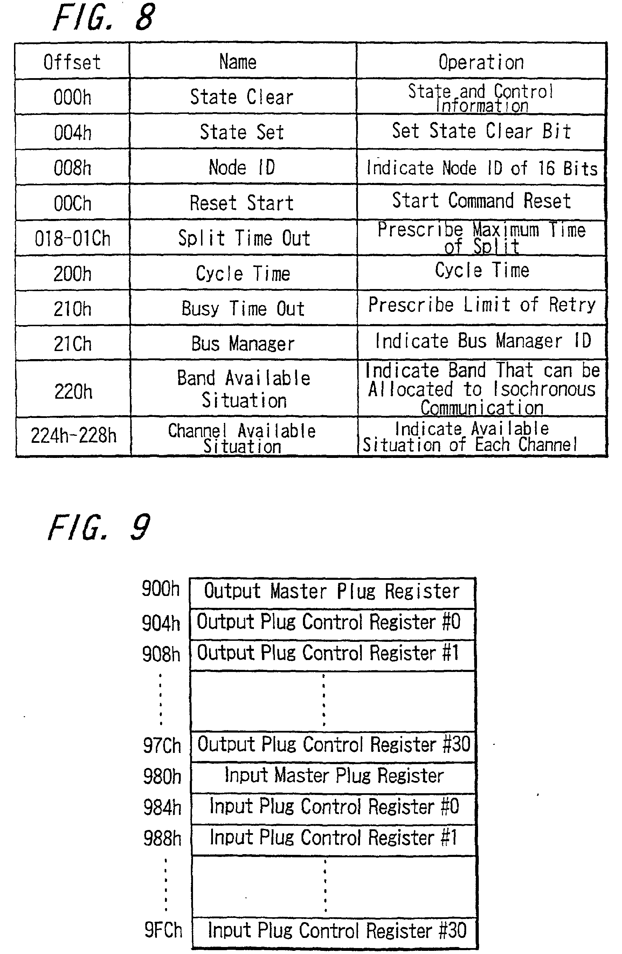

FIG. 8 is a diagram to which reference will be made in explaining offset addresses, names and operation of major CSRs. The offset in FIG. 8 indicates an offset address from FFFFF0000000h (numerals with h represent a hexadecimal notation) from which the initial resister space begins. A bandwidth available register (Bandwidth Available Register) having an offset 220h is a resister for allocating a band width and represents a band which can be allocated to the isochronous communication, and only a value of node which is being operated as an isochronous resource manager is made effective. Specifically, although each node includes the CSR shown in FIG. 6, only the bandwidth available register of the isochronous resource manager is made effective. In other words, only the isochronous resource manager includes the bandwidth available register substantially. The bandwidth available register preserves a maximum value when the band is not allocated to the isochronous communication and its value decreases each time the band is allocated to the isochronous communication.

A channel available register (Channel Available Register) of offsets 224h to 228h is a resister for allocating channels and has bits respectively corresponding to channel numbers from channel 0 to channel 63. If the bit is 0, then this shows that the corresponding channel is already allocated. Only the channel available register of the node which is being operated as the isochronous resource manager is effective.

Referring back to FIG. 7, a configuration ROM based on a general ROM (read only memory) format is located at addresses 200h to 400h within the initial register space. Bus info block, root directory and unit directory are located at the configuration ROM.

In order to control input and output of the device through the interface, the node includes a PCR (Plug Control Register), prescribed by the IEC 1833, at addresses 900h to 9FFh within the initial unit space shown in FIG. 7. This is a substantiation of a concept of a plug in order to form a signal channel similar to an analog interface from a logical standpoint. FIG. 9 is a diagram to which reference will be made in explaining the arrangement of the PCR. The PCR includes an oPCR (output Plug Control Register) expressing an output plug and an iPCR (input Plug Control Register) expressing an input plug. The PCR also includes registers oMPR (output Master Plug Register) and iMPR (input Master Plug Register) indicating information of the output plug or the input plug proper to each device. Each device cannot include a plurality of oMPRs and iMPRs but can include a plurality of oPCRs and iPCRs corresponding to individual plugs depending upon a device capability. The PCR shown in FIG. 9 includes 31 oPCRs and iPCRs. The flow of isochronous data can be controlled by operating registers corresponding to these plugs.

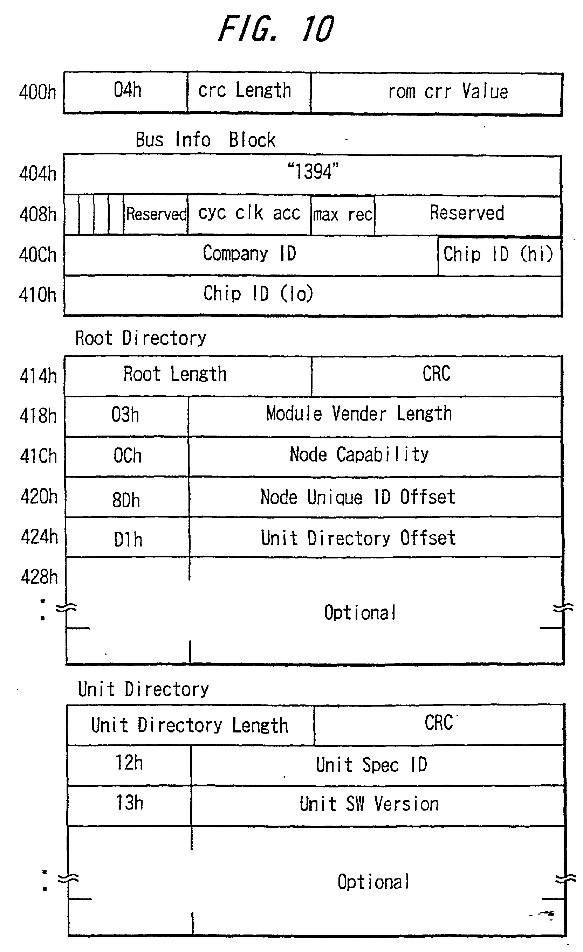

FIG. 10 is a diagram showing bus info block, root directory and unit directory in detail. An ID code indicative of device vender is stored in a company ID within the bus info block. A device unique ID, the only ID in the world which is different from any other device's ID is stored in a chip ID. A node-unique ID, which is an identification code unique to each device, is generated by using the company ID and the chip ID. According to the IEC 1833 standard, in the unit specification ID of the unit directory of the device which satisfies the IEC 1833, 00h is written in its first octet, A0h is written in its second octet and 2Dh is written in its third octet. Further, 01h is written in the first octet of a unit switch version (Unit sw version) and 1 is written in an LSB (Least Significant Bit) of the third octet.

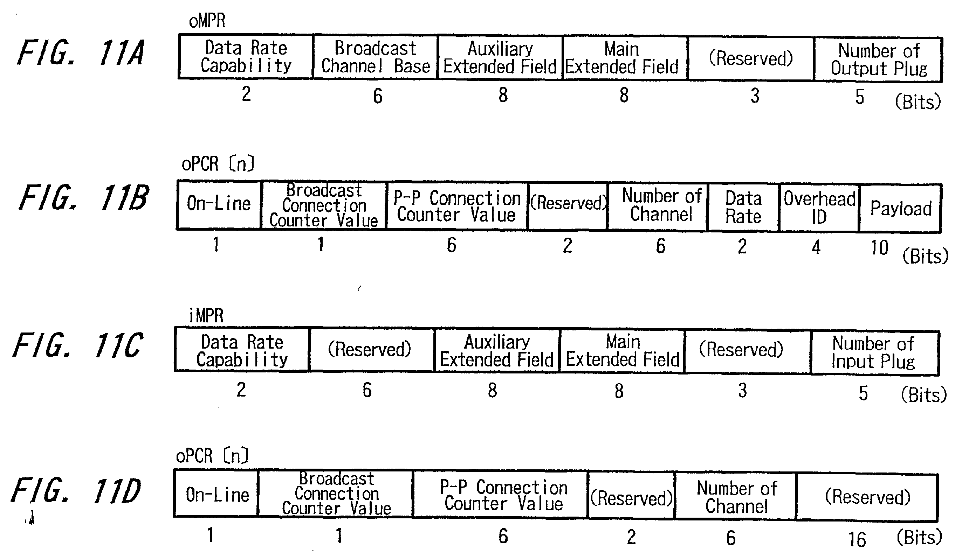

FIG. 11 is a diagram showing arrangements of the oMPR, the oPCR, the iMPR and the iPCR. FIG. 11A shows the arrangement of the oMPR, FIG. 11B shows the arrangement of the oPCR, FIG. 11C shows the arrangement of the iMPR and FIG. 11D shows the arrangement of the iPCR, respectively. A code indicative of a maximum transfer speed of isochronous data that the device can transmit or receive is stored in the 2-bit data rate capability (data rate capability) on the MSB side of the oMPR and the iMPR. A broadcast channel base (broadcast channel base) of the oMPR prescribes the channel number for use with the broadcast output (broadcast output).

The number of the output plugs of the device, i.e., the value indicative of the number of the oPCRs is stored in the number of the output plugs (number of output plugs) of 5 bits on the LSB side of the oMPR. The number of the input plugs of the device, i.e., the value indicative of the number of the iPCRs is stored in the number of the input plugs (number of input plugs) of 5 bits on the LSB side of the iMPR. A main extended field and an auxiliary extended field are the areas defined for future extension.

An on-line (on-line) on the MSB of-the oPCR and the iPCR shows the state in which the plug is in use. Specifically, if its value is 1, then it is indicated that the plug is on-line. If its value is 0, then it is indicated that the plug is off-line. A value of the broadcast connection counter (broadcast connection counter) of the oPCR and the iPCR expresses whether the broadcast connection exists (1) or not (0). A value that a point-to-point connection counter (point-to-point connection counter) having a 6-bit width of the oPCR and the iPCR expresses the number of point-to-point connection (point-to-point connection) of the plug. The point-to-point connection (hereinafter referred to as the P-P connection) is a connection used to transmit data among one specified node and another specified node.

A value of a channel number (channel number) having a 6-bit width of the oPCR and the iPCR expresses the isochronous channel number to which the plug is connected. A value of a data rate (data rate) having a 2-bit width of the oPCR expresses a real transmission speed of packets of the isochronous data outputted from the plug. A code stored in an overhead ID (overhead ID) having a 4-bit width of the oPCR expresses a band width of the overhead of the isochronous communication. A value of a payload (payload) having a 10-bit width of the oPCR expresses a maximum value of data contained in the isochronous packets that the plug can handle.

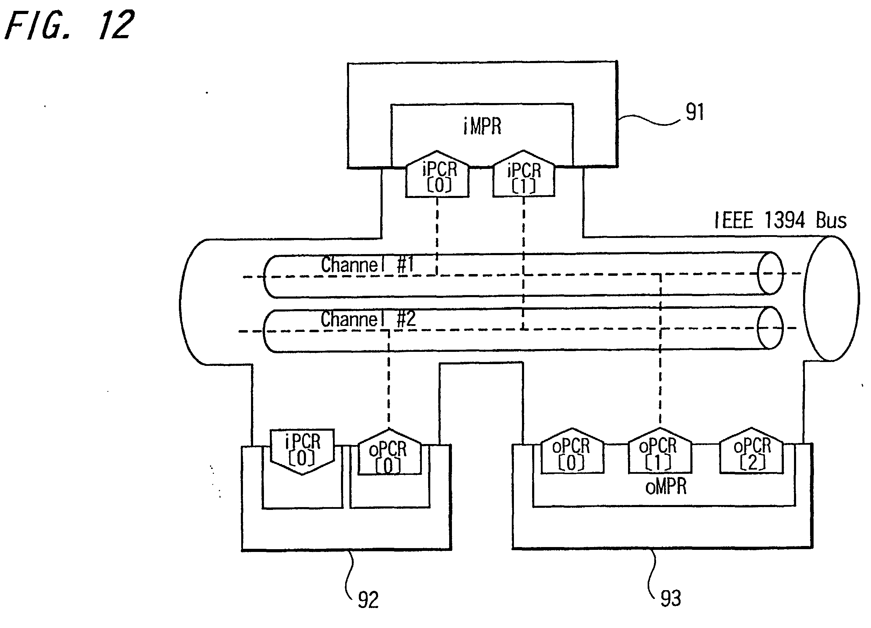

FIG. 12 is a diagram showing a relationship among the plug, the plug control register and the isochronous channel. Devices connected to the IEEE 1394 system bus are shown as AV devices (AV-device) 91 to 93. Isochronous data whose channel was designated by the oPCR [1] of the oPCR [0] to the oPCR [2] in which the transmission speed and the number of the oPCRs are prescribed by the oMPR of the AV device 93 is transmitted to the channel #1 of the IEEE 1394 serial bus. Based on the transmission speed of the inputted channel #1 and the iPCR [0] of the iPCR [0] and the iPCR [1] in which the transmission speed and the number of the iPCRs are prescribed by the iMPR of the AV device 71, the AV device 71 reads the isochronous data transmitted to the channel #1 of the IEEE 1394 serial bus. In a like manner, the AV device 92 transmits isochronous data to the channel #2 designated by the oPCR [0], and the AV device 71 reads the isochronous data from the channel #2 designated by the iPCR [1].

In this manner, data is transmitted among the devices connected by the IEEE 1394 serial bus.

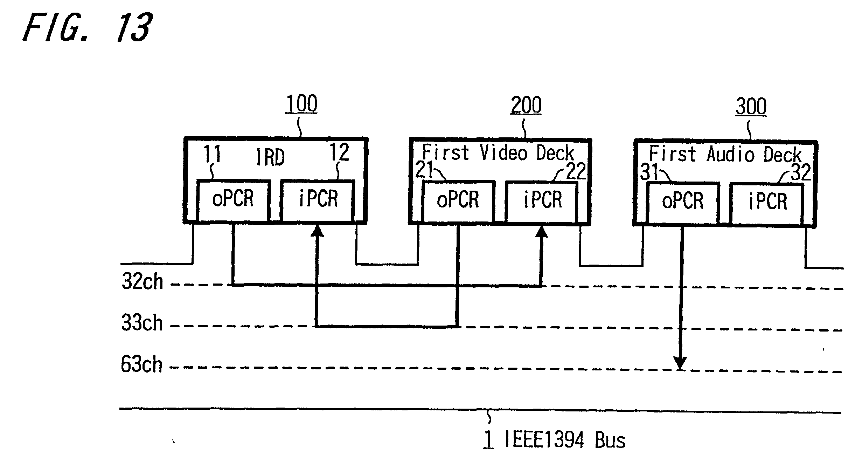

A process of establishing a connection between specific devices on the bus in such a network configuration will be described below. In this case, as shown in FIG. 13, the IRD 100 serving as a controller establishes a connection to the first video deck 200 which is one of target devices.

At this time, under the control of the IRD 100, a point-to-point connection (P-P connection) is established by using a predetermined isochronous channel (in this case, 32 ch) between an output plug register (oPCR: output Plug Control Register) 11 prepared in the IRD 100 and an input plug register (iPCR: input Plug Control Register) 22 prepared in the video deck 200.

Under the control of the IRD 100, a P-P connection is established by using a predetermined isochronous channel (in this case, 33 ch), which is different from the above-described channel, between an output plug register (oPCR) 21 prepared in the video deck 200 and an input plug control register (iPCR) 12 prepared in the IRD 100. The input plugs and the output plugs are imaginary plugs defined by the IEEE1394 system.

When data transmission need not be performed between the both devices 100 and 200, the connections using the 32 ch and the 33 ch are canceled by the control from the IRD 100. In the IEC61883-1 standards for defining the P-P connections, only a device which establishes a connection can cancel the connection. Here, only the IRD 100 which sets the connection can cancel the connection.

When the connection is established as described above, data can be transmitted bidirectionally using an isochronous channel between the IRD 100 and the video deck 200. More specifically, the IRD 100 serving as a controller may transmit a control signal to the video deck 200 serving as a target device to control the operation. However, when the target device is set in any state, two connections using the 32 ch and the 33 ch are kept established. This connection is canceled when the IRD 100 serving as the controller must stop the control of the target device or must control another target device. However, when a plurality of input plugs and a plurality of output plugs can be set by one device, while a connection to one target device is kept established, a connection to another target device may also be established.

Since the 63 ch which is a broadcast channel is not used between two devices, for example, as shown in FIG. 13, audio data or the like can be transmitted from the first audio deck 300 to the broadcast channel (63 ch).

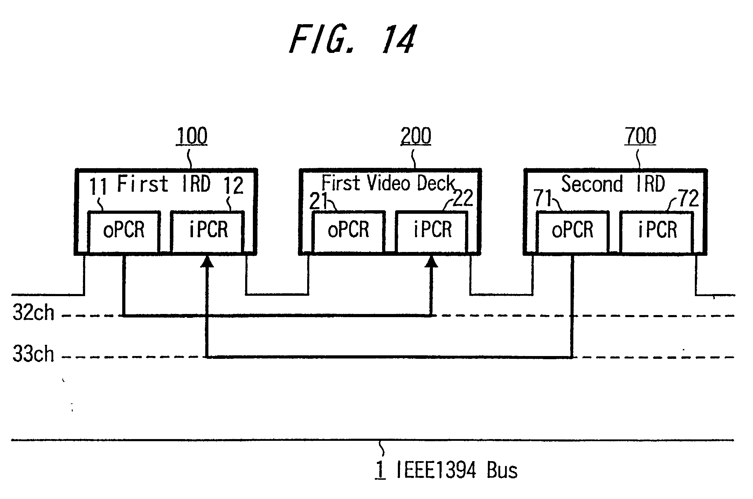

In the example in FIG. 13, a bidirectional connection is established between two devices. However, when only unidirectional data transmission from one device to another device is necessary, only the connection in this direction may be set. For example, as shown in FIG. 14, when only data transmission from the IRD 100 to the first video deck 200 is required, only a PtoP connection from the output plug (oPCR) 11 of the IRD 100 to the input plug (iPCR) 22 of the first video deck 200 may be established by using an arbitrary isochronous channel (in this case, the 32 ch) except for the broadcast channel.

When only a unidirectional connection is established as shown in FIG. 14, for example, the input plug 12 of the IRD100 is used, so that a connection to another device can also be established. For example, if another IRD (second IRD 70) is connected to the bus 1, a P-P connection is established by using another channel (33 ch) between an output plug 71 of the second IRD 70 and the input plug 12 of the first IRD 100, so that data transmission can also be performed.

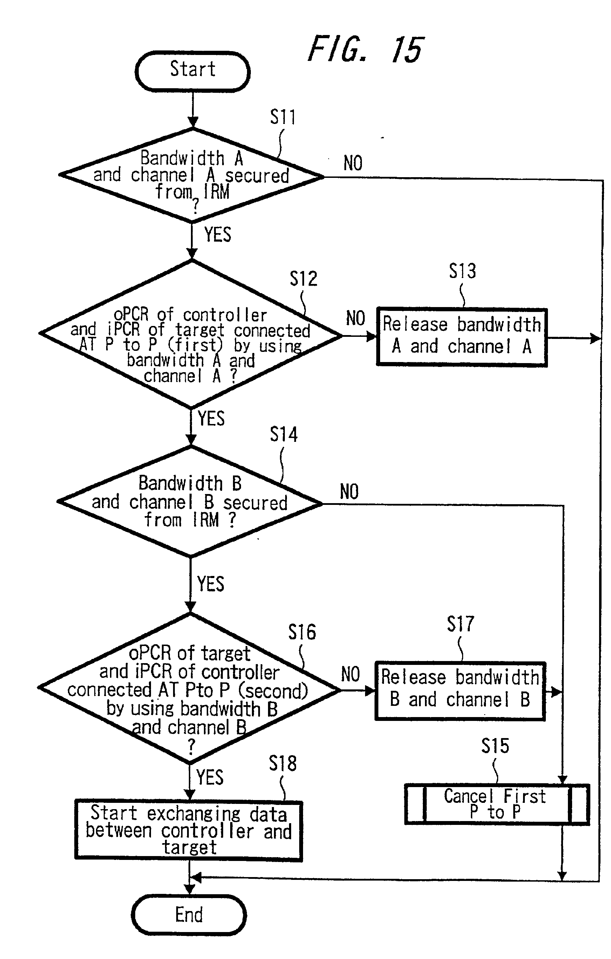

A concrete process used when the P-P connection is established will be described below with reference to a flow chart. First, a process of establishing a bidirectional P-P connection between two devices as shown in FIG. 13 will be described below with reference to the flow chart shown in FIG. 15.

The IRD 100 serving as a controller device determines whether an arbitrary bandwidth A and a channel A (channel except for a broadcast channel) are secured or not from an IRM (Isochronous Resource Manager) for managing isochronous·transmission on the bus 1 (step S11). In this case, if the channel and the band can be secured, it is determined whether a P-P connection is established by the secured channel and the band between the output plug of the controller and the input plug of the target device (step S12). In this case, the connection cannot be established, the secured bandwidth A and the channel A are opened (step S13).

When the P-P connection can be established in step S12, the IRD 100 determines whether another arbitrary bandwidth B and a channel B (in this case, a channel except for a broadcast channel) are secured to the IRM (step S14). Here, when the channel and the band cannot be secured, the connection which is confirmed in step S12 is canceled (step S15).

When the channel and the band can be secured in step S14, it is determined whether a P-P connection is established by the secured channel and the secured band between the output plug of the target device and the input plug of the controller (step S16). In this case, the connection cannot be established, the secured bandwidth B and the secured channel B are opened (step S17). The flow shifts to step S15 to also cancel the connection which confirmed in step S12.

If it is determined in step S16 that the connection is established, bidirectional exchange of data between the controller and the target device is started (step S18).

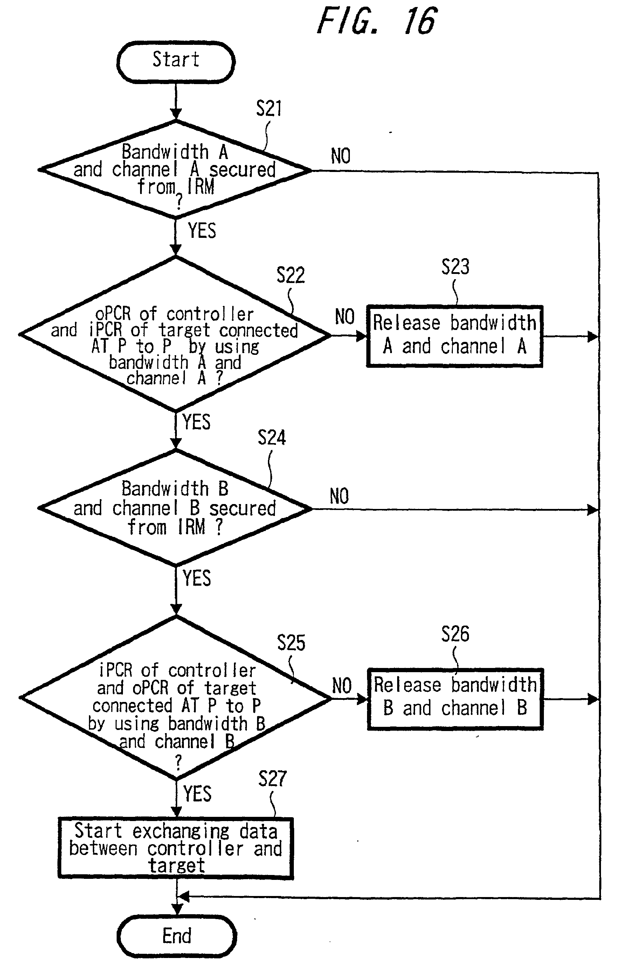

As shown in FIG. 14, a process performed when connections are established at the same time between a device on a network and a plurality of other devices will be described below with reference to the flow chart in FIG. 16. In this case, the IRD 100 as the controller determines whether an arbitrary-band A and a channel A (channel except for a broadcast channel) are secured from the IRM for managing isochronous transfer on the bus 1 (step S21). In this case, if the channel and the band can be secured, it is determined whether a P-P connection is established by the secured channel and the secured band between the output plug of the controller and the input plug of a first target device (step S22). In this case, the connection cannot be established, the secured bandwidth A and the secured channel A are opened (step S23).

Next, the IRD 100 as the controller determines whether an arbitrary band B and a channel B (channel except for a broadcast channel) are secured from the IRM for managing isochronous transfer on the bus 1 (step S24). If the channel and the band can be secured, it is determined whether a P-P connection is established by the secured channel and the secured band between the output plug of the controller and the input plug of a second target device (step S25). When the connection cannot be established, the secured bandwidth B and the secured channel B are opened (step S26).

If it is determined in step S25 that the connection is established, tranmission of data from the controller to the first target device and from the second target device to the controller is started (step S27).

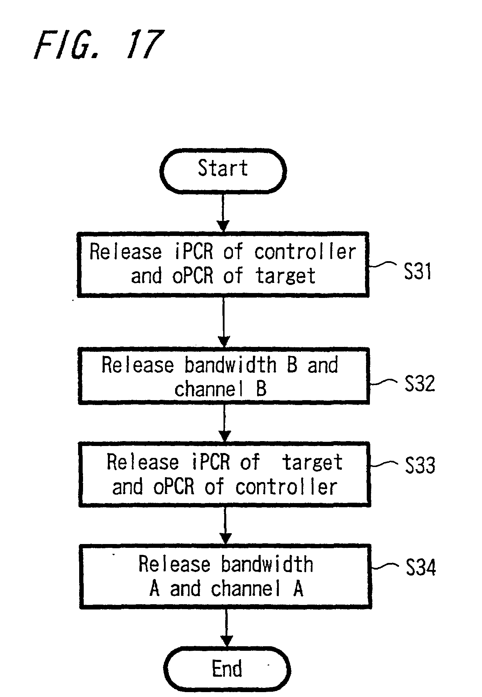

A process in which the data transmission using the connection established as described above is ended to cancel the connection will be described below. As shown in FIG. 13, a canceling process used when a bidirectional connection is established will be described below with reference to the flow chart in FIG. 17.

This canceling process can be realized only by a process performed from a device (in this case, controller) which establishs a connection, the input plug on the controller side and the output plug of the target device are opened first (step S31). Subsequently, the channel B and the band B which connect the input plug and the output plug to each other are opened (step S32). Then, the input plug of the target device and the output plug on the controller side are opened (step S33). Subsequently, the channel A and the band A which connect the input plug and the output plug to each other are opened (step S34).

In this manner, a transmission path to the controller is canceled first, and a transmission path from the controller to the target device is canceled, so that both the connections can be preferably canceled.

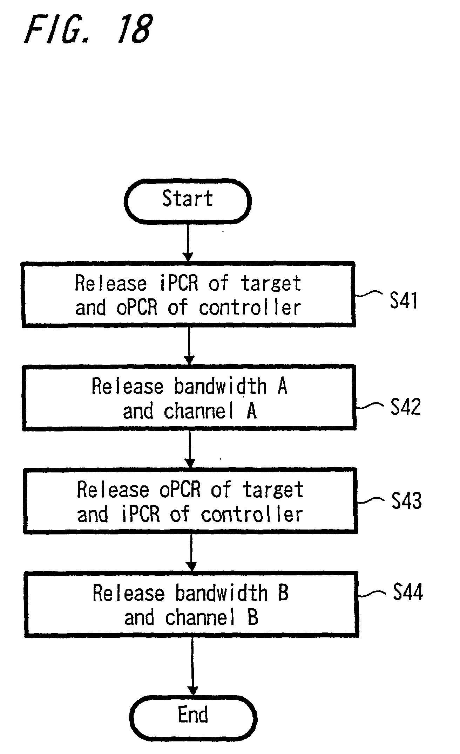

A canceling process performed when connections are established among three devices as shown in FIG. 14 will be described below with reference to the flow chart in FIG. 18. In this canceling process, after the connected input plug of a first target device and the connected output plug of the controller are opened (step S41), the band A and the channel A which connect the plugs to each other may be opened (step S42). Next, the connected input plug of the controller and the output plug of a second target device are opened (step S43), and the band B and the channel B which connect the plugs to each other may be opened (step S44).

When a new device is connected to the bus 1 or when any device connected to the bus 1 is removed from the bus 1, bus reset occurs. When the bus reset occurs, the connection which has been established is canceled. Therefore, when a connection must be held when the bus reset occurs, a recovering process for the connection must be performed.

In the regulation of the IEC61883-1 for regulating a connection, it is regulated that a stream up to this is continuously flowed for 1 second after bus reset. However, in the meanwhile, the connection is canceled. When the connection is re-established for 1 second after bus reset, a stream can be continued in an isochronous channel from each device.

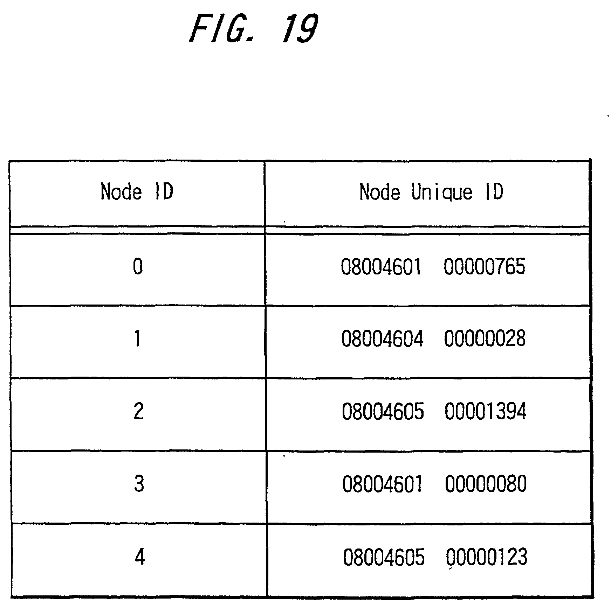

In the connection re-establishing process, data of a corresponding table between node IDs and node unique IDs are used. More specifically, a node ID is a value which changes every bus reset, and a node unique ID is data which a device which can be connected to the bus of the IEEE1394 system must have based on the company ID and the chip ID already explained in FIG. 10, and is an absolute value for each device (a unique value including a serial number or the like is set for each device). When the node unique ID of each device connected to the bus 1 is determined, it is understood that a specific node ID before bus reset corresponds to the device of a specific node ID after bus reset. Therefore, a device which performs the connection establishing process stores the data of the corresponding table between the node IDs and the node unique IDs, reads the data of the corresponding table when bus reset occurs, and determines a device, having a specific node ID, which re-establishes a connection. FIG. 19 is a diagram showing a corresponding table of node IDs and node unique IDs.

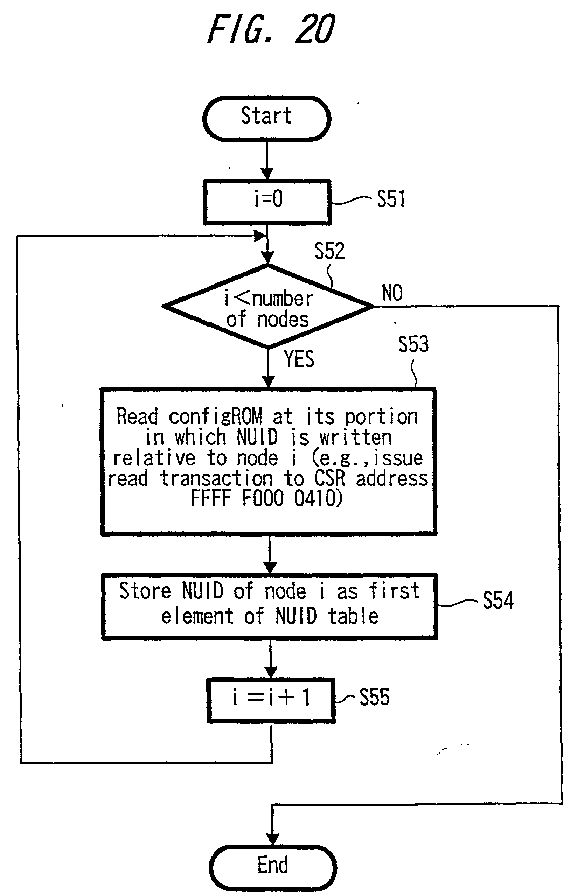

FIG. 20 is a flow chart showing an-example of a process of collecting the data of the corresponding table of the node IDs and the node unique IDs. First, i = 0 is set (step S51), and it is determined whether the set data i has a value smaller than the number of nodes connected to the bus or not (step S52). If the value is smaller than the number of nodes, data of a configuration ROM (config ROM) in which a node unit ID (NUID) is written is read to the device of the node ID of the number i (step S53). The reading process is executed such that a read transaction is issued to, e.g., a predetermined address.

A node unique ID whose node ID is i is stored as the ith data in the corresponding table (step S54). After the value i is incremented by 1 (step S55), the flow returns to the determination in step S52. If the value is smaller than the total number of nodes, the processes in steps S53, S54, and S55 are repeated. When the processes for all the nodes are executed, and when the value of i is equal to the number of nodes in step S52, the processes are ended. The determination of the number of nodes on the bus in step S52 is performed on the basis of the number of collected self ID packets flowing on the bus.

After the corresponding table is formed, the determination shown in the flow chart in FIG. 21 is performed, and the connection is re-established. More specifically, when the process of forming the corresponding table of the node unique IDs shown in the flow chart in FIG. 20 is completed (step S61), it is determined whether a destination device which establishes a connection before bus reset still exists on the bus after bus reset (step S62). If the destination device exists on the bus, a connection to the device is re-established (step S63). The re-establishment of the connection is performed within one second after bus reset,for example, so that the stream is not interrupted. When it is determined at step S62 that a destination device which establishes a connection before bus reset does not exist after bus reset, the connection is not re-established.

Here, a unique node ID is used to specify a device. However, when the device can be specified on the basis of another data, the data may be used. For example, SDD information (Self-Describing Devices information) may be used.

When the processes shown in the flow chart in FIG. 21 is performed, re-establishment is performed only when a destination which establishes a connection still exists after bus reset. When the destination which establishes the connection does not exist after bus reset, re-establishment is not performed, and an erroneous operation is not performed.

In the embodiment described above, when a connection between the IRD 100 and the deck 200 etc. is established, the IRD serves as a controller, and a process of establishing a connection to the deck 200 etc. serving as the target device is performed. However, a device except for the IRD 100 and the deck 200 may be used as a controller to establish or cancel the connection between the IRD 100 and the deck 200 etc.

In the embodiment described above, the network constituted by a bus of the IEEE1394 system is described. However, the present invention can also be applied to a case in which the same kind of data transmission between devices of another network configuration.

In the embodiment described above, a function of performing the above-described processes to the respective devices is set. However, any supply medium in which a program for executing the same kind of processes is stored may be distributed to a user, and the user may load the program stored in the medium on a computer device or the like to execute the same kind of function as described above.

### DESCRIPTION OF REFERENCE NUMERALS

- 1: the IEEE 1394 system bus line
- 11, 21, 31, 71: the virtual output plug (oPCR)
- 12, 22, 32, 72: the virtual input plug (iPCR)
- 91, 92, 93: the AV device
- 100: the digital satellite broadcast receiver (IRD)
- 101: the tuner
- 102: the descramble circuit
- 103: the demultiplexer
- 104: the MPEG video decoder
- 105: the adder
- 106: the NTSC encoder
- 107: the digital/analog converter
- 108: the GUI data generating section
- 109: the MPEG audio decoder
- 110: the digital/analog converter
- 111: the CPU
- 112: the interface section
- 113: the RAM for work area
- 114: the RAM
- 115: the operating panel
- 116: the infrared-ray light-receiving section
- 120: the antenna
- 200: the first video deck (DVCR)
- 203: the recording and reproducing section
- 204: the rotary head drum
- 205: the tape cassette
- 206: the analog/digital converter
- 207: the MPEG decoder
- 208: the digital/analog converter
- 209: the interface section
- 210: the central processing-unit (CPU)
- 211: the RAM
- 212: the operating panel
- 213: the infrared-ray light-receiving section
- 201: the tuner
- 202: the MPEG encoder
- 203: the recording and reproducing section
- 204: rotary head drum
- 205: the tape cassette
- 206: the analog/digital converter
- 207: the MPEG decoder
- 208: the digital/analog converter
- 209: the interface section
- 210: the central processing unit (CPU)
- 211: the RAM
- 212: the operating panel
- 213: the infrared-ray light-receiving section
- 300: the first audio deck
- 301: the analog/digital converter
- 302: the ATRAC encoder
- 303: the recording and reproducing section
- 304: the optical pickup
- 305: the disk
- 306: the ATRAC decoder
- 307: the digital/analog converter
- 308: the interface section
- 310: the central processing unit (CPU)
- 311: the RAM
- 312: the button
- 391: the amplifying apparatus
- 392, 393: the speaker
- 400: the second video deck
- 500: the second video deck
- 600, 600': the television receiver
- 601: the tuner
- 602: the receiving circuit section
- 603: the multiplexed data separating section
- 604: the video generating section
- 605: the CRT driving circuit section
- 606: the CRT (cathode-ray tube)
- 607: the audio signal reproducing section
- 608: the speaker
- 609: the interface section
- 610: the central processing unit (CPU)
- 611: the ROM
- 612: the RAM
- 614: the operating panel
- 615: the infrared-ray light-receiving section
- 700: the second digital satellite broadcast receiver

## Claims

1. A communication method for effecting a communication among devices connected to a predetermined network, comprising the steps of:
establishing a first connection between a first device connected to said network and another device;
establishing a second connection between said first device and other device; and
an isochronous communication is effected between said specific device and other device by using the two connections of said first connection and said second connection.

2. A communication method according to claim 1, wherein
said first connection is a connection established between a virtual output plug of said first device and a virtual input plug of a second device comprising said other device by using a first isochronous channel,
said second connection is a connection established between a virtual output plug of said second device and a virtual input plug of said first device by using a second isochronous channel, and
a bidirectional communication is effected by using said first and second isochronous channels with said first and second connections established thereon.

3. A communication method according to claim 1, wherein
said first connection is a connection established between a virtual output plug of said first device and a virtual input plug of a second device which is one of said other devices by using a first isochronous channel,
said second connection is a connection established between a virtual output plug of a third device which is one of said other devices and a virtual input plug of said first device by using a second isochronous channel, and
a communication from said first device to said second device is effected by using a first isochronous channel with said first connection established thereon and a communication from said third device to said first device is effected by using a second isochronous channel with said second connection established thereon.

4. A communication method according to claim 1, wherein
when the network is reset in the state in which said connection is established,
in order to re-establish the connection, which was canceled by the reset of the network, a work for re-establishing a connection is executed with reference to a table of identification IDs on the network and identification IDs unique to respective devices.

5. A communication method according to claim 4, wherein
if it is determined with reference to said table that the device in which the connection was set is not connected to the network, the work for re-establishing the connection is stopped.

6. A communication apparatus connected to a predetermined network including:
an output plug for outputting data to other device connected to the network by using a first isochronous channel:
an input plug for inputting data to said device by using a second isochronous channel; and
control means for individually setting a connection using said output plug and a connection using said input plug.

7. A communication apparatus according to claim 6, wherein
the device in which a connection with said output plug is established by said control means and the device in which a connection with said input plug is established by said control means are an input plug and an output plug of the same device.

8. A communication apparatus according to claim 6, wherein
the device in which a connection with said output plug is established by said control means is the input plug of the first device and
the device in which a connection with said input plug is established by said control means is the output plug of the second device.

9. A communication apparatus according to claim 6, wherein
when said control means detects that the network is reset in the state in which the connection is established, it executes a work for re-establishing a connection with reference to a table stored in a storage section which stores therein a table of identification IDs on the network and identification IDs unique to respective devices.

10. A communication apparatus according to claim 9, wherein
said control means stops the work for re-establishing the connection if it is determined by said control means based on the table stored in said storage section that the device in which the connection was established is not connected to the network.

11. A communication control apparatus for controlling a communication among a plurality of devices connected to a predetermined network including:
connection management means for effecting a control in such a manner that a first connection is established between a first device and other device connected to the network and a second connection is established between said first device and other device.

12. A communication control apparatus according to claim 11, wherein
the first connection established under control of said connection management means is a connection established by using the first isochronous channel between a virtual output plug of said first device and a virtual input plug of the second device comprising said other device,
the second connection established under control of said connection management means is a connection established by using a second isochronous channel between a virtual output plug of said second device and a virtual input plug of said first device and
a bidirectional communication is executed by using the first and second isochronous channels with said first and second connections established thereon.

13. A communication control apparatus according to claim 11, wherein
the first connection established under control of said connection management means is a connection established between a virtual output plug of said first device and a virtual input plug of the second device comprising said other device by using the first isochronous channel,
the second connection established under control of said connection management means is a connection established between a virtual output plug of a third device comprising said other device and the virtual input plug of said first device by using the second isochronous channel and
a communication from said first device to said second device using the first isochronous channel with said first connection established thereon and a communication from said third device to said first device by using the second isochronous channel with said second connection set thereon are executed.

14. A communication control apparatus according to claim 11, wherein
if said connection management means detects that a bus comprising said network is reset, said connection management means executes a work for re-establishing a connection with reference to a table of identification IDs on the network and identification IDs unique to respective devices in order to re-establish the connection that has been canceled by the reset of the network.

15. A communication control apparatus according to claim 11, wherein
said connection management means stops the work for re-establishing the connection if it is determined by said connection management means based on said table that the device with the connection established thereon is not connected to the network.

16. A communication system for effecting a communication between a first device and a second device connected to a predetermined network, wherein
said first device includes a virtual output plug for isochronous communication and a virtual input plug for isochronous communication,
said second device includes a virtual output plug for isochronous communication and a virtual input plug for isochronous communication,
a first connection is established between the virtual output plug of said first device and the virtual input plug of said second device by using a first isochronous channel,
a second connection is established between the virtual output plug of said second device and the virtual input plug of said first device by using a second isochronous channel and a bidirectional isochronous communication is effected between said first device and said second device by using said first connection and said second connection.

17. A communication system for effecting a communication among a first device, a second device and a third device connected to a predetermined network, wherein
said first device includes a virtual output plug for isochronous communication and a virtual input plug for isochronous communication,
said second device includes a virtual input plug for isochronous communication and
said third device includes a virtual output plug for isochronous communication,
a first connection is established between the virtual output plug of said first device and the virtual input plug of said second device by using a first isochronous channel,
a second connection is established between the virtual output plug of said third device and the virtual input plug of said first device by using a second isochronous channel and
a communication from said first device to said second device is effected by using said first connection and a communication from said third device to said first device is effected by using said second connection.

18. A supply medium which stores therein a program for controlling a communication effected among devices connected to a predetermined network, wherein
said supply medium stores therein a program in which a first connection is established between a first device and another device connected to said network, a second connection is established between said first device and other device and processing for effecting an isochronous communication between said first device and other device by using said first connection and said second connection is executed.
